# EUROPÄISCHE PATENTSCHRIFT

(11) **EP 1 209 387 B1**
(45) Veröffentlichungstag und Bekanntmachung des Hinweises auf die Patenterteilung: **06.10.2004**
(21) Anmeldenummer: 01126638.4
(22) Anmeldetag: 08.11.2001
(51) Int. Cl.: F16J 15/34

(54) **Gleitringdichtungsanordnung für hohe Drehgeschwindigkeiten**
Mechanical seal arrangement for high-speed rotation
Garniture mécanique d'étanchéité pour rotation à grande vitesse

(30) Priorität: 23.11.2000 DE 20019879 U
(43) Veröffentlichungstag der Anmeldung: 29.05.2002
(73) Patentinhaber: Burgmann Dichtungswerke GmbH & Co. KG, 82515 Wolfratshausen (DE)
(72) Erfinder: Schrüfer, Andreas, 82515 Wolfratshausen (DE); Wolf, Werner, 82291 Mammendorf (DE); Lederer, Günther, 82538 Geretsried (DE); Dröscher, Peter, 82538 Geretsried (DE); Nosowicz, Josef, Dr., 82538 Geretsried (DE); Steigenberger, Georg, 82541 Münsing (DE)
(74) Vertreter: Schmidt, Horst, Dr.

(56) Entgegenhaltungen:
- EP-A- 0 989 343

## Beschreibung

Die Erfindung betrifft eine Gleitringdichtungsanordnung zum Einsatz bei mit hoher Drehgeschwindigkeit rotierenden Bauteilen gemäss dem Oberbegriff des Patentanspruchs 1.

Die Erfindung betrifft insbesondere eine Gleitringdichtungsanordnung, die nicht nur für den Einsatz bei hohen Drehgeschwindigkeiten, sondern auch hohen abzudichtenden Drücken besonders geeignet ist. Bei derartigen Anwendungen werden für den rotierenden Gleitring keramische Materialien aufgrund ihrer guten Verschleisseigenschaften bevorzugt. Bei den hohen Drehgeschwindigkeiten kann der rotierende Gleitring jedoch, trotz des grundsätzlich hohen Widerstandes von keramischen Materialien wie Siliciumkarbid (SiC) oder gesinterten Materialien wie Wolframkarbid (WC) gegen thermische Verwerfungen und einer fehlenden unmittelbaren Berührungsnahme der Gleitringe, wegen Reibung mit dem gasförmigen oder flüssigen Medium im Dichtspalt (Molekularreibung) eine Erwärmung in einem solchen Ausmass erfahren, dass dies zu nicht tolerierbaren thermischen Verwerfungen bzw. Verkantungen des rotierenden Gleitringes führen kann, die die Dichtspaltgeometrie in unerwünschter Weise verändern können. Der Dichtspalt kann sich insbesondere keilförmig öffnen (so genannte V-Spaltbildung), was deutlich erhöhte Leckage zur Folge hat. In der EP 989 343 A1 wird zwar vorgeschlagen, zur Kompensation von thermischen Verwerfungen dem rotierenden Gleitring eine asymmetrische Querschnittskonfiguration zu verleihen, um ein durch die bei Betrieb auftretenden Fliehkräfte hervorgerufenes Drehmoment zu erzeugen, das den Gleitring in einem kompensierenden Sinne verschwenken will.

Der Erfindung liegt die Aufgabe zugrunde, eine Gleitringdichtungsanordnung der gattungsgemässen Art dahingehend zu verbessern, dass nicht nur unter den genannten Einsatzbedingungen durch thermisch bedingte Verwerfungen des rotierenden Gleitringes hervorgerufene schädliche Auswirkungen auf die Dichtspaltgeometrie ganz oder weitestgehend vermieden werden, sondern auch die Verwendung von rotierenden Gleitringen mit einer einfachen, vorzugsweise rechteckförmigen Querschnittskonfiguration möglich sein soll.

Zur Lösung dieser Aufgabe wird auf den kennzeichnenden Teil des Patentanspruchs 1 verwiesen. Danach ist als zusätzliches Bauteil der Dichtungsanordnung eine eine schwere Masse schaffende Einrichtung vorgesehen, die zur gemeinsamen Drehung mit dem rotierenden Bauteil angeordnet ist und sich an einen Bereich des rotierenden Gleitrings anlegen kann. Der Schwerpunkt der Masseneinrichtung steht in einem solchen axialen Abstand von dem des rotierenden Gleitrings, dass der rotierende Gleitring mit einem in eine bestimmte Richtung gerichteten Drehmonent entsprechend den an der Masseneinrichtung auftretenden Fliehkräften und dem Schwerpunkteabstand beaufschlagt wird. Hierdurch wird einer thermisch bedingten Verkantung des rotierenden Gleitringes wirksam entgegengetreten und dadurch eine Kompensation der durch die Verkantung geänderten Dichtspaltgeometrie geschaffen, so dass eine gewünschte Dichtspaltgeometrie auch dann aufrechterhalten bleibt, wenn der rotierende Gleitring bei hohen bis sehr hohen Drehgeschwindigkeiten zum Einsatz kommt. Dabei kann die Querschnittskonfiguration des rotierenden Gleitringes bei einer bevorzugten Rechteckform gehalten werden, was sich sowohl hinsichtlich des Betriebsverhaltens als auch der Fertigung und Montage des Gleitringes als auch des Austauschs verschlissener Gleitringe als vorteilhaft erweist. Um eine gleichmässige Verteilung der Fliehkräfte längs des Umfangs des rotierenden Gleitringes zu gewährleisten, wird gemäss einer Weiterbildung der Erfindung bevorzugt, dass die Masseneinrichtung aus einer Vielzahl umfänglich verteilter Einzelmassen zusammengesetzt ist, wobei die Einzelmassen unabhängig voneinander vorgesehen oder gelenkartig miteinander verbunden sein können.

Die Erfindung wird nachfolgend anhand einer Ausführungsform und der Zeichnung näher erläutert. Es zeigen:
- Fig. 1: in längsgeschnittener Ansicht eine Gleitringdichtungsanordnung gemäss einer Ausführungsform der Erfindung nach Einbau in einer abzudichtenden Gerätschaft,
- Fig. 2: in einer verkleinerten Ansicht von einer Seite einen eine Vielzahl von Einzelmassen aufweisenden Gelenkring, und
- Fig. 3: einen Schnitt längs der Schnittlinie III-III in Fig. 2.

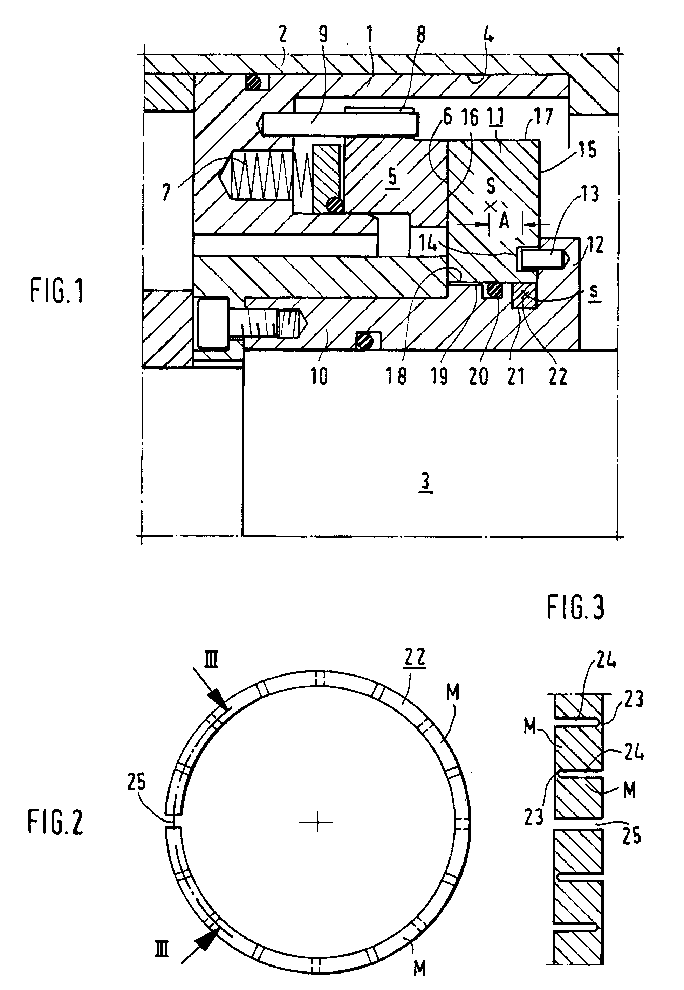

Mit dem Bezugszeichen 1 ist in Fig. 1 ein Dichtungsgehäuse einer Gleitringdichtungsanordnung nach der Erfindung versehen, das in einer Bohrung 4 in einem Gehäuse 2 (in der Zeichnung nur fragmentarisch gezeigt) einer Gerätschaft, z.B. eines Verdichters, angeordnet und befestigt werden kann. Eine Welle 3, z.B. eine Verdichterlaufradwelle, erstreckt sich durch die Bohrung 4 nach aussen. Im Dichtungsgehäuse 1 ist ein stationärer Gleitring 5 axial beweglich gehalten, der mit einem rotierenden Gleitring 11 zusammenwirkt. Eine Vorspanneinrichtung, z.B. in Gestalt einer Vorspannfeder 7 oder mehrerer umfänglich verteilter Vorspannfedern, die sich mit einem Ende am stationären Gleitring 5 und am anderen Ende am Dichtungsgehäuse 1 abstützen, ist vorgesehen, um den stationären Gleitring 5 mit einer Vorspannkraft gegen den rotierenden Gleitring 11 zu beaufschlagen. Der stationäre Gleitring 5 ist gegen Verdrehung relativ zum Dichtungsgehäuse 1 gehalten. Obschon andere diesbezügliche Einrichtungen vorgesehen sein können, steht bei der vorliegenden Ausführungsform vom Dichtungsgehäuse 1 ein Mitnehmerbolzen 9 axial ab, der in eine am stationären Gleitring 5 vorgesehene axiale Ausnehmung 8 drehsichernd eingreift.

Auf der Welle 3 ist eine Buchse 10 in geeigneter Weise drehfest montiert. Der rotierende Gleitring 11 ist auf der Buchse 10 in Lossitz aufgesetzt und wird zur gemeinsamen Drehung damit veranlasst, indem von einem flanschförmigen Endbereich 12 der Buchse 10 ein Mitnehmerstift 13 axial absteht, der in eine Bohrung 14 eingreift, die seitens einer dem flanschförmigen Endbereich 12 zugewandten Endfläche 15 des rotierenden Gleitringes 11 eingebracht ist. Die Abmessungen des Mitnehmerstiftes 13 und der Bohrung 14 sind so, dass hierdurch zwar eine drehkraftübertragende Beziehung zwischen dem rotierenden Gleitring 11 und der Buchse 10 zustande kommt, zwischen den Teilen andererseits ein ausreichendes Spiel vorliegt, so dass der rotierende Gleitring 11 mit der Buchse 10 nur in Lossitz drehkraftübertragend gekoppelt ist.

Wie dargestellt, überdeckt der flanschförmige Endbereich 12 der Buchse 10 nur einen kleinen radialen Flächenbereich der benachbarten Endseite 15 des rotierenden Gleitringes 11, so dass dieser rückwärtig im wesentlichen abstützungsfrei gehalten ist.

Die einander zugewandten Endflächen der Gleitringe 5, 11 schaffen im wesentlichen radial ausgerichtete Gleitflächen 6, 16, zwischen denen bei Betrieb ein Dichtspalt gebildet wird, der die Gleitflächen 6, 16 in einem berührungslosen Abstand voneinander hält. Bei Stillstand der Welle 3 werden die Gleitflächen 6, 16 dagegen durch die Vorspannkraft der Feder 7 in dichtendem Eingriff miteinander gedrückt, um auch bei Stillstand eine Leckage des abzudichtenden Mediums längs des Bereiches zwischen den Gleitflächen 6, 16 zu unterbinden. Wenn erwünscht, können in einer der Gleitflächen 6, 16 förderwirksame Strukturen eingebracht sein, um ein Medium, z.B. ein abzudichtendes Medium, zwischen die Gleitflächen zu pumpen und dadurch die Dichtspaltbildung zu fördern. Derartige förderwirksame Strukturen sind dem Fachmann bekannt und brauchen hier nicht näher erläutert zu werden.

Wie dargestellt, hat der rotierende Gleitring 11 vorzugsweise, jedoch nicht obligatorisch, einen im wesentlichen rechteckförmigen Querschnitt mit einer inneren und einer äusseren Umfangsfläche 17, 18. An der inneren Umfangsfläche 18 sitzt der rotierende Gleitring 11 auf einem äusseren radial vorstehenden Umfangsflächenbereich 19 der Buchse 10 in Lossitz auf. Eine Dichtung, z.B. in Gestalt eines O-Ringes 20, der in einer Ringnut im äusseren Umfangsflächenbereich 19 der Buchse 10 einliegt, ist vorgesehen, um zwischen den Umfangsflächen 18, 19 des rotierenden Gleitringes 11 und der Buchse 10 eine dichtende Beziehung vorzusehen.

In einer weiteren, von der inneren Umfangsfläche 18 des rotierenden Gleitrings 11 überdeckten Ringnut 21 im äusseren Umfangsflächenbereich 19 der Buchse 10 ist eine Masseneinrichtung angeordnet, die eine schwere Masse schafft, die unter Drehung der Buchse 10 entsprechend grosse radiale Fliehkräfte erzeugt. Obschon die Masseneinrichtung in anderer Weise, z.B. in Gestalt eines geteilten, mit der inneren Umfangsfläche 18 des rotierenden Gleitringes 11 in Eingriff tretenden Massenringes ausgebildet sein kann, wird bevorzugt ein Gelenkring 22, wie er in Fig. 2 gezeigt ist. Der Gelenkring 22 ist in der Nut 21 mit Spiel eingesetzt, so dass eine radiale Expansion des Gelenkringes 22 unter den einwirkenden Fliehkräften nicht behindert wird.

Der Flächenschwerpunkt des rotierenden Gleitringes 11 ist in Fig. 1 mit S und der des Gelenkringes mit s bezeichnet. Der Gelenkring 22 ist an einer solchen axialen Stelle des äusseren Umfangsflächenbereiches 19 der Buchse 10 vorgesehen, dass zwischen den Flächenschwerpunkten S und s ein axialer Abstand A in einer Richtung entgegengesetzt zur Richtung auf die Gleitflächen 6, 16 eingehalten ist.

Der Gelenkring 22 umfasst, wie dies in Fig. 2 und 3 gezeigt ist, eine Vielzahl umfänglich verteilt angeordneter Einzelmassen M, deren Einzelflächenschwerpunkte jeweils in dem axialen Abstand A vom Flächenschwerpunkt S des rotierenden Gleitringes 11 stehen. Benachbarte Einzelmassen M sind flexibel miteinander verbunden. Dazu kann zwischen benachbarten Einzelmassen M jeweils ein flexibler Steg 23 vorgesehen sein, so dass die Einzelmassen eine begrenzte radiale Relativbewegung zueinander vornehmen können. Wie Fig. 3 zeigt, können die Stege 23 durch von wechselseitigen Endseiten des Gelenkringes 22 aus eingebrachte Einschnitte 24 geschaffen werden, so dass einem Steg 23 nahe einer Endseite des Gelenkringes 22 ein solcher nahe der gegenüberliegenden Endseite folgt. Wie ferner aus Fig. 2 und 3 zu entnehmen ist, ist der Gelenkring 22 umfänglich geteilt ausgeführt, indem einer der Einschnitte 24 an einer geeigneten Umfangsstelle von einer Endseite zur gegenüberliegenden Endseite des Gelenkringes 22 durchgehend eingebracht und dadurch ein Spalt 25 gebildet ist.

Anstelle eines Gelenkringes 22 könnte auch eine Vielzahl von Einzelmassen in geeigneter Weise in Ausnehmungen im äusseren Umfangsflächenbereich 19 der Buchse 10 vorgesehen sein, ohne dass diese Einzelmassen umfänglich miteinander in Verbindung stehen. Auch brauchen die Einzelmassen nicht eine gleiche Massenwirkung hervorzurufen. Vielmehr könnten umfänglich verteilt schwerere Einzelmassen versetzt zu weniger schweren Einzelmassen angeordnet sein, die demzufolgen Fliehkräfte unterschiedlicher Grösse bei einer bestimmten Drehgeschwindigkeit schaffen.

Ferner kann vorgesehen sein, dass entweder der äussere Umfang des Gelenkringes 22 bzw. der Einzelmassen oder die innere Umfangsfläche 18 des rotierenden Gleitringes 11 an dem Abschnitt, an dem diese in Eingriff miteinander treten können, so ausgestaltet ist, dass eine verbesserte Übertragung der Fliehkräfte vom Gelenkring 22 auf den rotierenden Gleitring 11 bewirkt wird. Der Gelenkring 22 kann zu diesem Zweck beispielsweise an seinem äusseren Umfang einen in den axialen Abmessungen verkürzten radial vorstehenden Bereich aufweisen, der quasi einen Ringbund bildet, über den der Eingriff mit der inneren Umfangsfläche 18 des rotierenden Gleitringes 11 bewirkt wird. Als Alternative könnte der äussere Umfangsflächenbereich 19 der Buchse 10 nahe dem Gelenkring 22 mit einer ringförmigen Ausnehmung versehen sein, um die Eingriffsfläche zwischen der Umfangsfläche 18 des rotierenden Gleitringes 11 und der des Gelenkringes 22 zu verringern und dadurch verbesserte Kraftübertragungverhältnisse zu schaffen.

Aufgrund der dem Gelenkring 22 bzw. den Einzelmassen zukommenden Funktion werden dafür Materialien mit hohem spezifischen Gewicht bevorzugt. Obschon andere Materialien verwendet werden können, wird ein Wolframkarbid- oder Stahlmaterial bevorzugt.

Die Funktionsweise der, wie vorbeschrieben, ausgebildeten Gleitringdichtungsanordnung ist wie folgt. Aufgrund der bei hohen Drehgeschwindigkeiten der Welle 3, z.B. bei Drehzahlen von 10.000 min⁻¹ und mehr im Dichtspalt zwischen den Gleitflächen 6, 16 trotz der fehlenden Berührungsnahme entstehenden Reibungswärme (Molekularreibung) erfährt der rotierende Gleitring 11 eine Erwärmung mit einem Temperaturgradienten von der Gleitfläche 16 zur gegenüberliegenden äusseren Endfläche 15. Die durch die thermisch bedingten Verformungen bei hohen Drehzahlen hervorgerufene Verkantung des rotierenden Gleitrings 11 äussert sich in einer entsprechenden Änderung der Dichtspaltkonfiguration, indem der Dichtspalt zwischen den Gleitflächen 6, 16 um einen Winkel keilspaltförmig geöffnet wird. Ein derartig veränderter Dichtspalt würde erhöhte Leckage zur Folge haben. Dem wird erfindungsgemäss dadurch entgegengetreten, dass die bei hohen Drehzahlen am Gelenkring 22 bzw. den Einzelmassen auftretenden Fliehkräfte ausgenutzt werden, um den rotierenden Gleitring 11 mit einer radialen Kraft zu beaufschlagen, die ein Drehmoment mit dem Hebelarm A ausübt, das bewirkt, dass der Gleitring 11 eine Drehung erfährt, die im Sinne einer Verringerung des Dichtspaltöffnungswinkels wirkt, so dass die durch die thermisch bedingte Verformung bewirkte Öffnung des Dichtspaltes kompensiert werden kann. Das kompensierende Drehmoment ist umso grösser, je höher die Drehzahl und demzufolge die thermische Verwerfung ist. Durch entsprechende Auslegung des Gelenkringes 22 bzw. der Einzelmassen und des Abstandes A zwischen den Schwerpunkten S, s kann für jede Gleitringdichtungsanordnung die kompensierende Wirkung des fliehkraftbedingten Drehmomentes für einen zulässigen Drehzahlbereich ermittelt und optimiert werden, so dass eine vollständige oder annähernd vollständige Kompensation der thermisch bedingten Abweichungen von einer gewünschten Dichtspaltkonfiguration erreicht werden kann.

Versuche an einer Gleitringdichtungsanordnung nach der Erfindung mit einem Nenndurchmesser von 130 mm bei einer Drehgeschwindigkeit von 15.000 min⁻¹ haben gezeigt, dass bei sämtlichen abzudichtenden Drücken, insbesondere einem Druck von über 200 bar mit den erfindungsgemässen Mitteln die Leckage eines gasförmigen Mediums gegenüber einer Gleitringdichtungsanordnung ohne fliehkraftinduzierter Kompensation der Dichtspaltgeometrie deutlich, d.h. um mehr als die Hälfte verringert werden konnte.

## Patentansprüche

1. Gleitringdichtungsanordnung zum Einsatz bei einem mit hoher Drehgeschwindigkeit rotierenden Bauteil (10,3), mit einem drehfesten Gleitring (5) und einem zur gemeinsamen Drehung mit dem rotierenden Bauteil in Lossitz haltbaren Gleitring (11) mit einem Schwerpunkt (S) und mit einer bei Betrieb im wesentlichen radial ausgerichteten Dichtfläche(16) zum Zusammenwirken mit einer gegenüberliegenden Dichtfläche (6) des drehfesten Gleitrings, und einer gemeinsam mit dem rotierenden Bauteil rotierbaren schwere Massen durch die der rotierende Gleitring mit einem in Richtung auf den drehfesten Gleitring (5) gerichteten Drehmonent unter den herrschenden Fliehkräften beaufschlagbar ist, **dadurch gekennzeichnet, dass** die schwere Masse in Form einer einen inneren Umfangsbereich (18) des rotierenden Gleitrings (11) mit den Fliehkräften radial beaufschlagenden separaten Masseneinrichtung (22) vorgesehen ist, deren Schwerpunkt (s) in einem axialen Abstand (A) von dem Schwerpunkt (S) des rotierenden Gleitringes (11) angeordnet ist.

2. Gleitringdichtungsanordnung nach Anspruch 1, **dadurch gekennzeichnet, dass** die Masseneinrichtung (22) in einer ringförmigen, von einer inneren Umfangsfläche (18) des rotierenden Gleitrings (11) überdeckten Ausnehmung (21) des rotierenden Bauteils (10) aufnehmbar ist.

3. Gleitringdichtungsanordnung nach Anspruch 1 oder 2, **dadurch gekennzeichnet, dass** die Masseneinrichtung (22) aus einer Vielzahl umfänglich verteilter Einzelmassen (M) zusammengesetzt ist.

4. Gleitringdichtungsanordnung nach Anspruch 3, **dadurch gekennzeichnet, dass** benachbarte Einzelmassen (M) gelenkartig miteinander verbunden sind.

5. Gleitringdichtungsanordnung nach Anspruch 4, **dadurch gekennzeichnet, dass** ein Gelenkring (22) mit zwischen benachbarten Einzelmassen (M) wechselseitig nahe der einen und anderen Ringendseite vorgesehenen Verbindungsstegen (23) vorgesehen ist.

6. Gleitringdichtungsanordnung nach einem der vorhergehenden Ansprüche, **dadurch gekennzeichnet, dass** das Material für die Masseneinrichtung (22) ein Stahlmaterial umfasst.

7. Gleitringdichtungsanordnung nach einem der Ansprüche 1 bis 6, **dadurch gekennzeichnet, dass** das Material für die Masseneinrichtung (22) ein gesintertes Material, insbesondere WC, umfasst.

8. Gleitringdichtungsanordnung nach einem der vorhergehenden Ansprüche, **dadurch gekennzeichnet, dass** der rotierenden Gleitring (11) aus einem keramischen Material, insbesondere SiC, gebildet ist.

9. Gleitringdichtungsanordnung nach einem der Ansprüche 1 bis 7, **dadurch gekennzeichnet, dass** der rotierenden Gleitring (11) aus einem gesinterten Material, insbesondere WC gebildet ist.

## Claims

1. A face seal device for use with a component (10,3) rotating at a high rotational speed, including a non-rotating face seal ring (5) and a face seal ring (11) adapted to be mounted in a loose fit for common rotation with said rotating component and having a centre of gravity(S), said rotating face seal ring further having a sealing face (16) which, in operation, is essentially radially aligned with an opposite sealing face (6) of the non-rotating face seal ring for cooperation therewith, and a heavy mass arranged for common rotation with the rotating component for applying to the rotating face seal ring torque directed towards the non-rotating face seal ring (5) in correspondence with the centrifugal forces prevailing, **characterized in that** said heavy mass is provided in the form of a separate mass means (22) radially exerting the centrifugal forces to an inner peripheral portion (18) of said rotating face seal ring (11), the centre of gravity (s) of said mass means being axially spaced by a spacing (A) from the centre of gravity (S) of the rotating face seal ring (11).

2. The face seal device according to claim 1, **characterized in that** said mass means (22) is adapted to be accomodated in an annular recess (21) in the rotating component (10), said annular recess (21) being covered by an inner peripheral surface (18) of said rotating face seal ring (11).

3. The face seal device according to claim 1 or 2, **characterized in that** the mass means (22) is composed of a plurality of peripherally distributed individual masses (M).

4. The face seal device according to claim 3, **characterized in that** adjacent individual masses (M) are connected with each other in articulated manner.

5. The face seal device according to claim 4, **characterized in that** an articulated ring (22) is provided, said articulated ring having connecting webs (23) provided between adjacent individual masses (M), said connecting webs being arranged alternately near the one and then the other one of the end faces of the ring.

6. The face seal device according to one of the preceding claims, **characterized in that** the material for the mass means (22) includes a steel material.

7. The face seal device according to one of the claim 1 to 6, **characterized in that** the material for the mass means (22) includes a sintered material, especially WC.

8. The face seal device according to one of the preceding claims, **characterized in that** the rotating face seal ring (11) is formed of a ceramic material, especially SiC.

9. The face seal device according to one of the claims 1 to 7, **characterized in that** the rotating face seal ring (11) is formed of a sintered material, especially WC.

## Revendications

1. Garniture mécanique d'étanchéité destinée à être utilisée dans le cas d'un composant tournant à grande vitesse (10, 3), avec un anneau glissant fixe en rotation (5) et un anneau glissant (11) pouvant être stabilisé dans un logement mobile destiné à pivoter conjointement avec le composant en rotation présentant un centre de gravité (S) et une surface étanche (16) orientée essentiellement radialement en cours d'utilisation et destinée à coopérer avec une surface étanche opposée (6) de l'anneau glissant fixe en rotation, et avec une masse lourde pouvant être mise en rotation conjointement avec le composant tournant, par l'intermédiaire de laquelle l'anneau glissant en rotation peut être actionné avec un moment de couple orienté dans le sens de l'anneau glissant fixe en rotation (5) sous l'effet des forces centrifuges exercées, **caractérisée en ce que** la masse lourde se présente sous forme d'un élément de masse séparé (22) appliquant les forces centrifuges radialement sur une zone périphérique intérieure (18) de l'anneau glissant en rotation (11), dont le centre de gravité (s) est situé à distance axiale (A) du centre de gravité (S) de l'anneau glissant en rotation (11).

2. Garniture mécanique d'étanchéité selon la revendication 1, **caractérisée en ce que** l'élément de masse (22) peut être logé dans un creux (21) du composant en rotation (10) recouvert par une surface périphérique intérieure circulaire (18) de l'anneau glissant en rotation (11).

3. Garniture mécanique d'étanchéité selon la revendication 1 ou 2, **caractérisée en ce que** l'élément de masse (22) se compose d'une pluralité de masses individuelles réparties circonférentiellement (M).

4. Garniture mécanique d'étanchéité selon la revendication 3, **caractérisée en ce que** les masses individuelles voisines (M) sont reliées entre elles de façon articulée.

5. Garniture mécanique d'étanchéité selon la revendication 4, **caractérisée en ce qu'**un anneau articulé (22) est prévu, avec des nervures de raccordement (23) placées en alternance entre les masses individuelles voisines (M) à proximité de chaque partie extérieure de l'anneau.

6. Garniture mécanique d'étanchéité selon l'une quelconque des revendications précédentes, **caractérisée en ce que** le matériau de l'élément de masse (22) comprend un matériau de type acier.

7. Garniture mécanique d'étanchéité selon l'une des revendications 1 à 6, **caractérisée en ce que** le matériau de l'élément de masse (22) comprend un matériau fritté, en particulier de type carbure de tungstène.

8. Garniture mécanique d'étanchéité selon l'une quelconque des revendications précédentes, **caractérisée en ce que** l'anneau glissant en rotation (11) est fabriqué dans un matériau céramique, en particulier le carbure de silicium.

9. Garniture mécanique d'étanchéité selon l'une des revendications 1 à 7, **caractérisée en ce que** l'anneau glissant en rotation (11) est fabriqué dans un matériau fritté, en particulier le carbure de tungstène.
